# NEW EUROPEAN PATENT SPECIFICATION

(11) **EP 0 322 941 B2**
(45) Date of publication and mention of the opposition decision: **26.02.1997**
(45) Mention of the grant of the patent: 10.04.1991
(21) Application number: 88202756.8
(22) Date of filing: 01.12.1988
(51) Int. Cl.: A01C 23/02

(54) **Liquid manure injector**
Injektionsvorrichtung für Flüssigmist
Injecteur d'engrais liquide

(30) Priority: 02.12.1987 NL 8702901
(43) Date of publication of application: 05.07.1989
(60) Divisional application: 89202742.6
(73) Proprietor: VREDO DODEWAARD B.V., NL-6669 DJ Dodewaard (NL)
(72) Inventor: De Vree, Johannes, NL-6669 DJ Dodewaard (NL)
(74) Representative: Hoijtink, Reinoud

(56) References cited:
- DE-A- 2 018 143
- DE-A- 2 358 972
- DE-A- 2 734 803
- DE-A- 2 943 962
- DE-A- 3 426 742
- FR-A- 1 071 408
- FR-A- 1 386 236
- FR-A- 1 388 668
- GB-A- 1 068 895
- NL-A- 7 608 638
- US-A- 1 286 268
- US-A- 2 912 944
- US-A- 3 499 495
- US-A- 3 799 079
- US-A- 4 326 675
- US-A- 4 538 532
- US-A- 4 598 654
- "Een machine voor het injecteren van mengmest in grasland", W.J. Buitink, Landbouwmechanisatie 33, May 1982
- "Operator's Manual 7000 Max-Emerge ...", John Deere, Plow & Planter Works OM-A45509 Issue E2
- "Fundamentals of Machine operation", Crop Chemicals, John Deere, 1982 (2nd edition)
- "Vredo, de injectienaald voor uw weiland", Brochure de Vree's Machinebouw
- "Stalmest en Gier", G.J. Kolenbrander et al, 1967, H. Veenman & Zn, Wageningen (NL)

## Description

The invention relates to a device as described in the preamble of claim 1. Such a device is known from GB-A-1,068,895.

The spreading of manure on arable or meadow land using liquid manure is increasingly the source of environment related problems. When the manure or liquid manure is spread over the land, a large quantity of ammonia is released which is absorbed into the environment via the air. Not only does this cause a not directly discernible deterioration in the environment but it also creates a considerable smell nuisance. It is therefore a problem in urgent need a solution.

The invention has for its object to spread liquid manure on the grassland, such that the burden on the environment is considerably reduced.

A further object of the invention is to provide means to provide a very narrow cut in the soil to prevent the existing grass on the meadowland to be damaged.

This is achieved by the features as specified in the characterizing part of claim 1.

Using the device according to the invention a narrow cut to a depth of for example 5 cm is made in the grassland. This causes no or hardly any damage to the meadowland and also ensures that the liquid manure is immediately carried beneath the surface of the ground. The liquid manure is there absorbed by the surrounding earth so that the quantity of ammonia released into the air is minimal, all the more so since the cut made in the ground is extremely narrow so that contact with the air is greatly limited.

It is remarked that from US-A-4,598,654 a furrow opener comprising a pair of blades disposed at a slope to one another and to the vertical is known. The blades are provided with notches at their circumference presenting sharp cutting edges for slicing crop residue. Such a furrow opener is not suitable to provide a very narrow cut in the meadowland without damaging existing plants.

When multiple pairs of blades are used in parallel the step according to claim 2 is applied with advantage.

In view of the fact that nozzles of comparatively small diameter are used there is great danger of blockage by solid portions present in the liquid manure. In order to avoid this the step as according to claim 3 is applied. In this way only thin liquid manure without large solid portions is fed to the distribution system. The liquid manure is preferably transported by an impeller pump placed in the manner as specified in claim 4.

In preference the step as according to claim 5 is applied.

It is remarked that manure injectors are known in which a pointed member, which is also the discharge nozzle for the liquid manure, is pulled through the ground. The drawback to this construction is that because the nozzle moves in the ground the outflow opening becomes blocked. Attempts have been made to prevent this occurring by making use of high pressure pumps. The construction according to the present application does not display these drawbacks since a narrow cut is first made in the ground using separate means and liquid manure is then injected into the cut made without the nozzle coming into contact with the ground.

The invention will be further described with reference to a preferred embodiment. In the drawing :

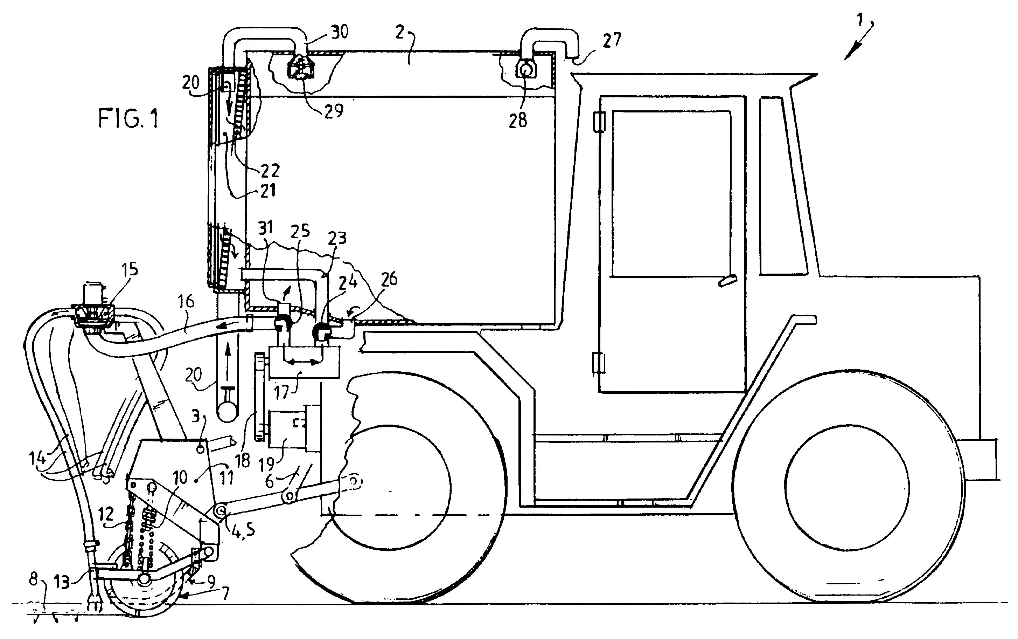

fig. 1 shows a side view of an embodiment of the invention,

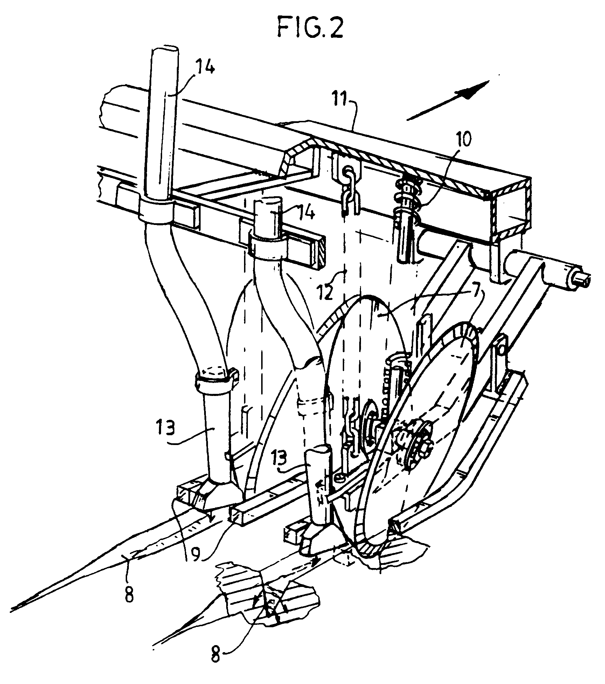

fig. 2 is a rear view of a detail of the cutting-injecting device, and
fig. 3 is a perspective rear view of a part of the device.
fig. 4 shows an embodiment of a filter,
fig. 5 shows an alternative embodiment of a filter, and
fig. 6 is a side view of a device according to the invention with the filter as in fig. 5.

Mounted onto a tractor 1 is a tank 2 which serves as a reservoir for liquid manure. Arranged at the rear of the tank using a three-point suspension 3, 4, 5 is the cutting-injecting construction. The height of the cutting-injecting device can be controlled with the lever 6. Using pairs of narrow blades 7 in V-shaped disposition a thin cut of approximately 5 cm is made in the ground. During cutting of the ground the carriage 9 present by each pair of blades rests on the surface of the ground. The bias of the blade pair is produced by the pressure spring 10. The blade pair is suspended on the frame 11 using the chain 12.

Associated with each pair of blades is a nozzle 13 for the injecting of liquid manure into the cut made. The nozzle 13 is connected with a feed line 14 to a distribution means 15. The distribution means 15 connects the successive nozzles and feed lines 13, 14 at high speed onto the pipe 16 which is connected to the reservoir 2. The liquid manure is fed from reservoir 2 using an impeller pump 17 which is driven via a belt and gearbox transmission 18, 19 by a drive shaft of the tractor (not drawn). The speed of revolution of the impeller pump 17 can be controlled using the gearbox 19.

For filling of the reservoir 2 the connection conduit 20 is placed for example in a liquid manure pit. The pump draws up the liquid manure which enters a space 21 and is pressed through the filter 22 which has a mesh width for instance of 3 × 3 cm. The filtered liquid manure then enters reservoir 2 via the line 33, the valve 24 and the valve 25. The valve 24 to the feed line 26 is hereby closed, as is the valve 25 to line 16. The air present in reservoir 2 is forced out of reservoir 2 via the bleed channel 27 in which is accommodated a valve 28. When reservoir 2 is filled with liquid manure the valve 28 is pressed shut and the valve 29 in the circulation line 30 is opened. The liquid manure then flows through the line 30 to the filter 22 and keeps on circulating as long as the pump is in operation. The connection between the distribution means 15 and the reservoir 2 can subsequently be effected by closing the valve 24 to the line 23 and opening it to discharge opening 26, and by closing the valve 25 to the opening 31 and opening it to line 16.

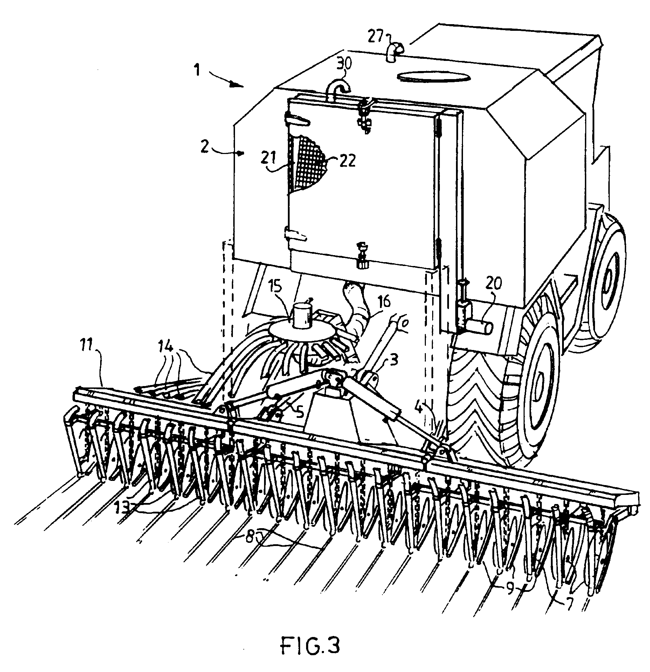

By folding up both end portions of the injection system the width of the whole device is reduced such that transport over public highways is also possible (see fig. 3 with broken lines).

It is further noted that it is of course also possible for the reservoir 2 to be mounted on a separate tank wagon to be pulled by a tractor.

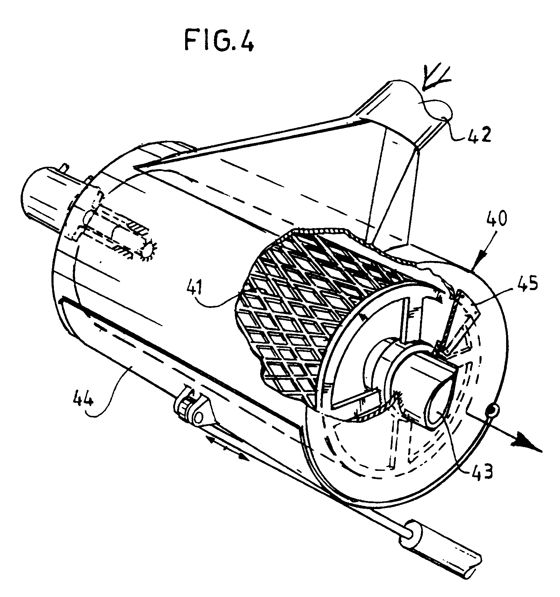

As fig. 4 shows an embodiment of the invention consists of a cylindrical body 40 inside which a mesh-form mantle 41 is rotatable. The liquid manure to be sucked in and pumped into the reservoir 2 is drawn through the inlet branch 42 to the outer periphery of mantle 41 and, with the large pieces strained out, discharged via the shaft outlet pipe 43. For the purpose of removing the large pieces not allowed through the mesh of the mantle 41 the body 40 is provided with a valve 44 which provides access to the outer side of the mesh-form mantle 41. Mantle 41 can be rotated in order to make all parts of the periphery accessible for cleaning thereof. In addition, another door 45 is arranged in order to allow access to the interior of mantle 41.

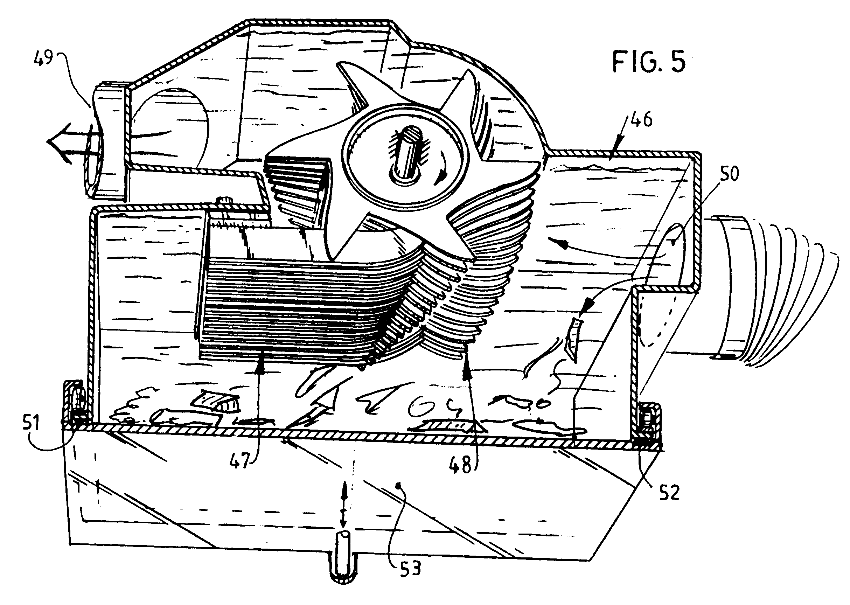

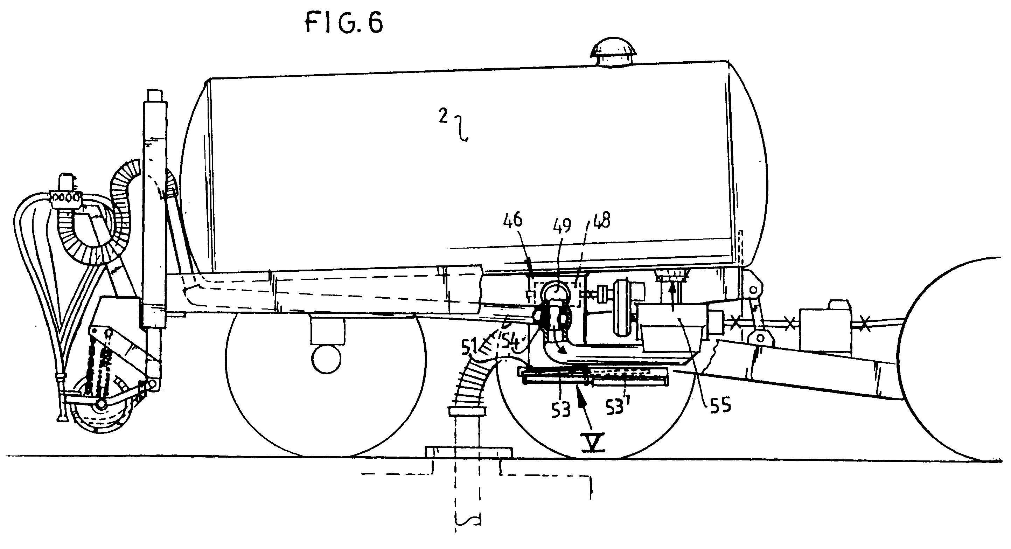

As will be seen in figures 5 and 6 a second embodiment of the filter according to the invention consists of a chamber 46. Present inside the chamber 46 is a slat-form body 47 in a stationary disposition. Further disposed for rotary driving is a body 48 in slat form, which slats rotate between those of the stationary body 47. The body 48 is star-shaped in section. On the chamber the suction side of a pump is connected to the branch 49, while the liquid manure for filtering is fed in via the opening 50. The opening 50 can be connected to a feed line. The branch 49 leads via the pump to the reservoir 2.

Arranged on the underside is a sealed 51, 52 slide plate 53 which after being opened enables removal of the large portions not allowed through the filter body 47, 48. During use the liquid manure is sucked in to the branch 49 and thereby passes through the rotating body 48. This prevents the passage of large chunks and moves them to the bottom. As a result of a cutting action they can be reduced in size during the movement of the slats of the rotary body 48 between the slats of the stationary body 47. Portions that cannot be cut up fall to the bottom of the chamber 46 and can be removed therefrom during cleaning. As can be seen from fig. 6 a ball valve 54 is arranged. The pump 55 is reversible so that when liquid manure is being pumped out of reservoir 2, after reversing of the ball valve 54, this pump can serve to carry liquid manure out of the reservoir to the nozzles close to the blades.

## Claims

1. Device for introducing liquid manure into the meadowland, comprising means (7) for opening a furrow and a nozzle (13) debouching close to said furrow openers, said nozzle being connected to a supply line connected to a reservoir (2) for liquid manure, characterized in that said furrow openers having each one pair of blades (7) disposed at a slope with respect to one another and to the vertical, which come almost into contact with one another at a contact point at an angle to the vertical, which pair of blades are biased in downward direction, whereby each blade has the shape of a flat disk, the external side of each disk being externally chamfered such that the outer edge of the disk forms a continuous circular line.

2. Device as claimed in claim 1, **characterized in that** each supply line connected to a nozzle (13) is joined to the discharge side of a distribution means, the feed side of which is coupled to a manifold connected to the reservoir (2).

3. Device as claimed in claims 1-2, **characterized in that** the filling opening of the reservoir (2) is provided with a filter.

4. Device as claimed in claim 3, **characterized in that** an impeller pump (17) is connected to the filling opening of the reservoir.

5. Device as claimed in claims 3-4, **characterized in that** the mesh opening of the filter (22) does not exceed the cross-sectional area of the nozzle or one of the lines.

6. Device as claimed in claim 3, **characterized in that** the filter (22) consists of a cylindrical body (40) and a mesh-form (41) mantle disposed concentrically inside it, a feed line (42) to the outer periphery of said mantle and a discharge line (43) on the inside of said mantle.

7. Device as claimed in claim 3, **characterized in that** the filter (22) is formed by a chamber (46), a slat-form body (47) in a stationary disposition inside said chamber, a rotating body (48) in slat form, which slats rotate between those of said stationary body, a discharge opening (49) on said chamber and a feed opening (50) on said chamber.

8. Device as claimed in claim 7, **characterized in that** the rotating body (48) is star-shaped in section.

9. Device as claimed in claim 4, **characterized in that** the pump (17) is a reversible pump.

## Patentansprüche

1. Vorrichtung zum Einleiten von Flüssigmist in Wiesenland, mit Mitteln (7) zum Öffnen einer Furche und einer nahe zu den Furchenöffnern ausmündenden Düse (13), wobei die Düse mit einer an einem Behälter (2) für den Flüssigmist angeschlossenen Speiseleitung verbunden ist, dadurch gekennzeichnet, daß die Furchenöffner jeweils ein Paar von schräg zueinander und zu der Vertikalen angestellten Streichblechen (7) aufweisen, die miteinander in einem Berührungspunkt unter einem Winkel zu der Vertikalen nahezu in Berührung kommen, welche Streichenblechpaare in Abwärtsrichtung vorgespannt sind, wobei jedes Streichblech die Form einer flachen Scheibe aufweist und die äußere Seite jeder Scheibe nach außen derart abgeschrägt ist, daß die äußere Kante der Scheibe eine kontinuierliche Kreislinie bildet.

2. Vorrichtung nach Anspruch 1, dadurch gekennzeichnet, daß jede mit einer Düse (13) verbundene Speiseleitung an der Ausgabeseite des Verteilungsmittels angeschlossen ist, dessen Zulaufseite mit einer Hauptleitung verbunden ist, die ihrerseits mit dem Behälter (2) verbunden ist.

3. Vorrichtung nach den Ansprüchen 1 und 2, dadurch gekennzeichnet, daß die Auffüllöffnung des Behälters (2) mit einem Filter (22) versehen ist.

4. Vorrichtung nach Anspruch 3, dadurch gekennzeichnet, daß eine Flügelradpumpe (17) mit der Auffüllöffnung des Behälters (2) verbunden ist.

5. Vorrichtung nach den Ansprüchen 3 und 4, dadurch gekennzeichnet, daß die Maschenweite des Filters (22) die Querschnittsgröße der Düse oder einer der Leitungen nicht überschreitet.

6. Vorrichtung nach Anspruch 3, dadurch gekennzeichnet, daß der Filter (22) einen zylindrischen Körper, in dessen Inneren ein Gittermantel zu dem Körper konzentrisch angeordnet ist, eine Speiseleitung (42) zu dem äußeren Bereich des Mantels und eine Ausgabeleitung (43) im Inneren des Mantels aufweist.

7. Vorrichtung nach Anspruch 3, dadurch gekennzeichnet, daß der Filter (22) von einem Gehäuse (46), einem im Inneren des Gehäuses stationär angeordneten Plattenpaketkörper (47), einem rotierenden Plattenpaketkörper (48), dessen Platten zwischen den Platten des stationären Körpers rotieren, einer Ausgabeöffnung (49) an dem Gehäuse und einer Speiseöffnung (50) an dem Gehäuse gebildet wird.

8. Vorrichtung nach Anspruch 7, dadurch gekennzeichnet, daß der rotierende Körper (48) im Querschnitt sternförmig ist.

9. Vorrichtung nach Anspruch 4, dadurch gekennzeichnet, daß die Pumpe (17) eine reversible Pumpe ist.

## Revendications

1. Dispositif pour introduire de l'engrais liquide dans une prairie, comprenant des moyens (7) pour ouvrir un sillon et un ajutage (13) débouchant tout près desdits moyens d'ouverture de sillon, ledit ajutage étant relié à une canalisation d'alimentation reliée à un réservoir (2) pour engrais liquide, caractérisé en ce que lesdits moyens d'ouverture de sillon ont chacun une paire de lames (7) disposées en biais l'une par rapport à l'autre et par rapport à la verticale, qui viennent presqu'en contact l'une avec l'autre à un point de contact en formant un angle avec la verticale, la paire de lames etant sollicitee en direction descendante, chaque lame ayant la forme d'un disque plat, le côté extérieur de chaque disque étant chanfreiné extérieurement, de telle sorte que le bord extérieur du disque forme une ligne circulaire continue.

2. Dispositif comme revendiqué dans la revendication 1, caractérisé en ce que chaque canalisation d'alimentation reliée à un ajutage (13) est réunie au côté de décharge de moyens de distribution, dont le côté d'alimentation est couple à un collecteur relié au réservoir (2).

3. Dispositif comme revendiqué dans les revendications 1 et 2, caractérisé en ce que l'ouverture de remplissage du réservoir (2) est munie d'un filtre (22).

4. Dispositif comme revendiqué dans la revendication 3, caractérisé en ce qu'une pompe à roue à hélice (17) est reliée à l'ouverture de remplissage du réservoir.

5. Dispositif comme revendiqué dans les revendications 3 et 4, caractérisé en ce que l'ouverture de maille du filtre (22) n'excède pas la surface de section transversale de l'ajutage ou d'une des canalisations.

6. Dispositif comme revendiqué dans la revendication 3, caractérisé en ce que le filtre (22) consiste en un corps cylindrique (40) et un manchon maillé (41) disposé concentriquement à l'intérieur de lui, une canalisation d'alimentation (42) débouchant à la périphérie extérieure dudit manchon et une canalisation de décharge (43) débouchant à l'intérieur dudit manchon.

7. Dispositif comme revendiqué dans la revendication 3, caractérisé en ce que le filtre (22) est formé par une chambre (46), un corps (47) en forme de lames disposé stationnairement à l'intérieur de ladite chambre, un corps rotatif (48) en forme de lames, dont les lames tournent entre celles dudit corps stationnaire (47), une ouverture de décharge (49) située sur ladite chambre et une ouverture d'alimentation (50) situee sur ladite chambre.

8. Dispositif comme revendiqué dans la revendication 7, caractérisé en ce que le corps rotatif (48) a une section conformée en étoile.

9. Dispositif comme revendiqué dans la revendication 4, caractérisé en ce que la pompe (17) est une pompe réversible.
